Europäisches Patentamt

European Patent Office

Office européen des brevets

(19)

(11) **EP 0 708 916 B1**

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(21) Anmeldenummer: **94921632.9**

(22) Anmeldetag: **29.06.1994**

(51) Int Cl.⁶: **G01N 3/34**

(86) Internationale Anmeldenummer:
**PCT/EP94/02108**

(87) Internationale Veröffentlichungsnummer:
**WO 95/02810 (26.01.1995 Gazette 1995/05)**

(54) **PRÜFMASCHINE FÜR UMLAUFBIEGUNG LANGER RUNDSTÄBE**

ROTATING BENDING TESTING MACHINE FOR LONG ROUND RODS

MACHINE D'ESSAI DE FLEXION ROTATIVE POUR LONGUES BARRES RONDES

(84) Benannte Vertragsstaaten:
**DE FR IT**

(30) Priorität: **15.07.1993 DE 4323718**

(43) Veröffentlichungstag der Anmeldung:
**01.05.1996 Patentblatt 1996/18**

(73) Patentinhaber:
**INDUSTRIEANLAGEN-BETRIEBSGESELLSCHA
FT M.B.H.
D-85521 Ottobrunn (DE)**

(72) Erfinder: **HÜCK, Manfred
D-85591 Vaterstetten (DE)**

(74) Vertreter: **Bohnenberger, Johannes, Dr. et al
Meissner, Bolte & Partner
Postfach 86 06 24
81633 München (DE)**

(56) Entgegenhaltungen:
**EP-A- 0 499 943          CH-A- 101 435
DE-A- 3 204 472          DE-C- 716 010**

• **PATENT ABSTRACTS OF JAPAN vol. 009, no.
257 (P-396) 15. Oktober 1985 & JP,A,60 107 545
(TOUKIYOU KOUKI SEIZOUSHIYO:KK) 13. Juni
1985**

## Beschreibung

Die Erfindung betrifft eine Prüfmaschine zum Prüfen langer Rundstäbe auf ihre Umlaufbiegefestigkeit gemäß dem Oberbegriff des Anspruchs 1.

Gegenstand der Prüfung sind Rundstäbe, wie sie für die Herstellung von Schraubenfedern und Stabilisatoren im Fahrzeugbau, z.B. für Pkw, Busse, Lkw und Schienenfahrzeuge, aber auch in stationären Anwendungen, eingesetzt werden. Ziel der Prüfung ist die experimentelle Ermittlung der Schwingfestigkeit mit dem Ziel, solche Rundstäbe, die keine ausreichende Schwingfestigkeit besitzen, schon vor der kostenerzeugenden Weiterverarbeitung erkennen und aussondern zu können.

Bei der Fertigung von Pkw- und Lkw-Schraubenfedern und -Stabilisatoren wird in der Regel von Rundstäben einer Länge von L = 1000 bis 4000 mm und einem Durchmesser von D = 12 bis 25 mm ausgegangen. Diese Rundstäbe werden in einem weitgehend automatisierten Fertigungsablauf zum Endprodukt verarbeitet. Durch Schwingversuche wird stichprobenartig am fertigen Produkt die geforderte Schwingfestigkeit überprüft. Falls diese nicht ausreicht, kann das entweder an einem mangelhaften Fertigungsprozeß liegen, oder an einer nicht ausreichenden Qualität der dazu verwendeten Rundstäbe, oder auch an beidem.

Obwohl Schraubenfedern und Stabilisatoren hauptsächlich auf Torsion beansprucht werden, haben sich in der Praxis die schnell und unaufwendig durchzuführenden Umlaufbiegeversuche als hinreichend aussagefähig erwiesen.

Der derzeitige Stand der Technik bei Umlaufbiegeversuchen ist durch Prüfstände gekennzeichnet, die einen kurzen und im Prüfbereich abgesetzten Probestab erfordern. Durch die dafür notwendige Bearbeitung wird der zu untersuchende Rundstab jedoch in unzulässiger Weise verändert, da Material abgetragen werden muß und die Oberfläche anschließend eine geänderte Struktur besitzt. Außerdem ist die geringe Prüflänge mit ca. 50 bis 100 mm nicht repräsentativ für die gesamte Länge des Rundstabes. Zusätzlich ist die Bearbeitung zeit- und kostenintensiv. Daher sind die handelsüblichen Umlaufbiegeprüfstände für den vorliegenden Zweck wenig geeignet.

Die DE-C-0 71 16 010 beschreibt zum Beispiel eine derartige Prüfmaschine. Der kurze Probestab wird an beiden Enden in Hülsen eingespannt, die in jeweils zwei Kugellagern derart gelagert sind, daß sie mit der Antriebsachse fluchten. Am antriebsseitigen Ende der Hülse ist ein Kugellager ortsfest angeordnet. Aus der von ihm gelagerten Hülse führt eine Welle über eine Kupplung zur Antriebswelle. Am anderen Ende der Anordnung ist das letzte Kugellager insoweit beweglich, als daß es einer Längenänderung des Prüflings parallel der Rotationsachse folgen kann. Die beiden mittleren Lager sind über ein Gestänge miteinander und mit einem Laufgewichtsbalken gelenkig verbunden. Durch Verschieben des Laufgewichts kann die Biegebeanspruchung des umlaufenden Prüflings eingestellt werden. Durch eine verstellbare Rast am beweglichen Ende des Laufgewichtsbalkens kann das Umlaufexperiment durch die eintretende Entlastung des Prüflings schrittweise unterbrochen und der Zustand des Prüflings untersucht werden. Diese Prüfmaschine zeigt alle eingangs genannten Nachteile (kurzer, speziell angefertigter Prüfstab, fest eingespannt im Lager und Hülse).

Um auch unbearbeitete Rundstäbe einspannen zu können, ist es wichtig, eine Schädigung der Rundstäbe durch die Einspannung selbst zu vermeiden. Letzteres gelingt durch die Verwendung von Kunststoff-Spannbacken. Prüfstände dieser Art sind schon gelegentlich bei den Draht- und Federnherstellern in Betrieb.

Da die Prüfkräfte bei Umlaufbiegeprüfständen in der Regel an vier Punkten des Rundstabes eingeleitet werden (Vierpunktbiegung), muß der Rundstab bei dieser Art Prüfstände an vier Stellen über die Kunststoffeinspannbacken befestigt werden. Dieser Vorgang ist zeitraubend. Außerdem werden für jeden Drahtdurchmesser entsprechend dimensionierte Einspannbacken benötigt.

Ausgehend von diesem Stand der Technik ist es Aufgabe der vorliegenden Erfindung, eine Prüfmaschine weiterzubilden, bei der das zeitaufwendige Einspannen der Rundstäbe in die Kunststoffbacken entfällt, bei der nicht für jeden Rundstabdurchmesser jeweils ein Satz entsprechend dimensionierter Kunststoffeinspannbacken vorgehalten werden muß und die einfach zu handhaben ist.

Diese Aufgabe wird erfindungsgemäß wie folgt gelöst:

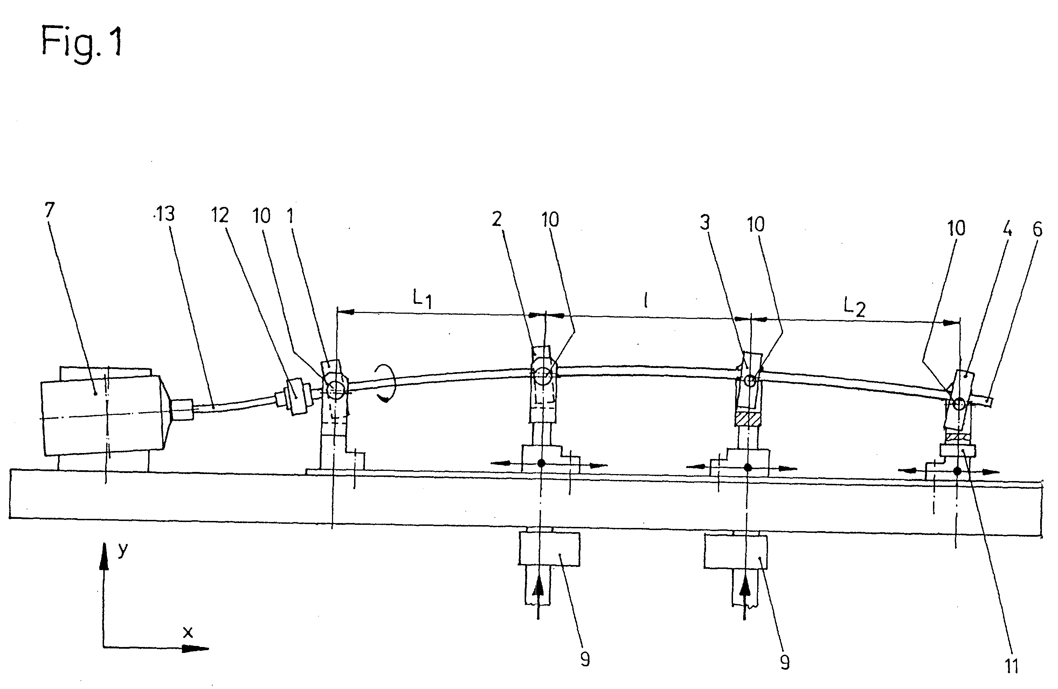

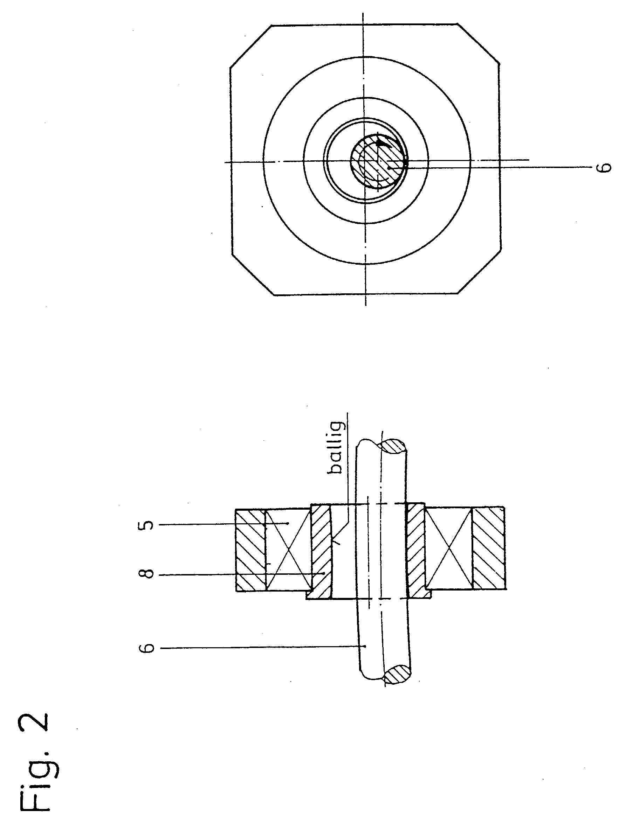

Die Prüfmaschine besitzt vier Lager 1 - 4, von denen das dem Antrieb 7 nächstgelegene ortsfest montiert ist, wogegen die übrigen drei in Längsrichtung der Prüfmaschine verschiebbar sind (Figur 1). Jedes Lager 1 - 4 enthält ein Wälzlager 5, in dessen Innenring eine Hülse 8 aus Kunststoff, beispielsweise aus Ertalyte (Polyaethylenterephtalath), eingesetzt ist. Die Hülsen 8 der beiden mittleren Lager 2 und 3 sind auf der Ablauffläche ballig ausgeführt (Figur 2), um sich der Biegelinie des Rundstabes 6 angleichen zu können. Der Innendurchmesser der Hülse 8 ist deutlich größer als der Durchmesser des zu prüfenden Rundstabes 6, so daß dieser in einfacher Weise vor Versuchsbeginn durch die vier (zunächst noch in fluchtender Position stehenden) Lager 1 - 4 geschoben und über die Einspannkupplung 12 mit dem Antrieb 7 verbunden werden kann. Sodann wird die gewünschte Biegespannung bzw. - dehnung auf den Rundstab 6 aufgebracht, indem definierte Belastungskräfte bzw. Verformungen mittels der Hubvorrichtungen 9 über die beiden inneren Lager 2 und 3 aufgebracht werden. Damit die Lager 1 - 4 ohne Verkantung der so erzeugten Biegelinie folgen können, sind sie schwenkbar um die Achse 10 ausgeführt.

Für die Erfindung wesentlich ist, daß der zu prüfende Rundstab 6 in den vier Krafteinleitungspunkten 1 bis 4 nicht eingespannt wird, sondern sich auf dem mit einem Kunststoffring 8 ausgekleideten Innenring des Lagers 5 abwälzt, sobald der Antriebsmotor 7 den Rundstab in Rotation bringt (Figur 2). Durch entsprechende Dimensionierung des Innendurchmessers des Kunststoffrings 8 und Wahl der Lagerabstände $L_1$, 1 und $L_2$ wird erreicht, daß sämtliche Durchmesser von Rundstäben im Bereich von D = 12 mm bis 25 mm bei gleicher Flächenpressung zwischen Rundstab 6 und Kunststoffring 8 ohne zusätzliche Einspannmittel geprüft werden können. Dadurch entfällt der zeitraubende Vorgang des Ein- und Ausspannens. Die angegebenen Durchmesser sind die Hauptanwendungsbereiche in der Praxis. Die Prüfmaschine ist bei entsprechender Auslegung auch für kleinere und für größere Durchmesser einsetzbar.

Die beiden mittleren Krafteinleitungspunkte 2 und 3 können in vertikaler Richtung entweder gemäß eines bestimmten Moments (= Spannung) oder entsprechend einer bestimmten Verformung 20 (= Dehnung) eingestellt werden. Für die Einleitung eines bestimmten Moments arbeitet man gelegentlich mit Gewichtsbelastung eventuell über Hebel. Diese Lösung besitzt jedoch den Nachteil, daß das Gewicht und der verspannte Rundstab ein schwingungsfähiges Feder-Masse-System bilden, das bei der Rotation des Rundstabes durch seine stets vorhandenen Krümmungen zu Schwingungen angeregt wird, was zu unkontrollierbaren Zusatzbeanspruchungen des Rundstabes führt. Deshalb ist, wie in Fig. 1 dargestellt, einer Verspannung des Rundstabes gemäß einer bestimmten Verformung der Vorzug zu geben. Unkontrollierte schwingende Zusatzbeanspruchungen können damit ausgeschlossen werden.

Vorteilhaft ist außerdem, daß die Lagerkräfte auf der jeweils momentanen Druckseite des rotierenden Prüflings eingeleitet werden. Dadurch ist die ermüdungskritische Zugseite unter Umlaufbiegebeanspruchung frei von lagerbedingten Einflüssen. Die Schrägstellung der Lager bewirkt allerdings eine Kraftkomponente in Längsrichtung der Biegelinie, die als Knicklast wirkt, deren Betrag jedoch bei entsprechender Wahl der Lagerabstände vernachlässigbar klein gehalten werden kann.

Die Führung des Rundstabes 6 in Hülsen aus hochfestem Kunststoff hat gegenüber Führungen aus z.B. Stahl oder anderen Metallen den Vorzug, daß praktisch kein abrasiver Verschleiß oder spannungskorrosionen auftreten.

Es ist vorteilhaft, die Prüfmaschine mit vier Lagern, d.h. mit vier Krafteinleitungspunkten, auszurüsten, weil sich so zwischen den Lagern 2 und 3 eine kreisförmige Biegelinie erreichen läßt, wenn die Abstände der Krafteinleitung symmetrisch sind. Prüfmaschinen mit nur drei Krafteinleitungspunkten gehören jedoch ebenso zum Erfindungsumfang wie solche mit mehr als vier.

Vor Beginn der Prüfung muß die Dehnung bzw. Spannung, unter der der Rundstab 6 geprüft werden soll, reproduzierbar eingestellt werden.

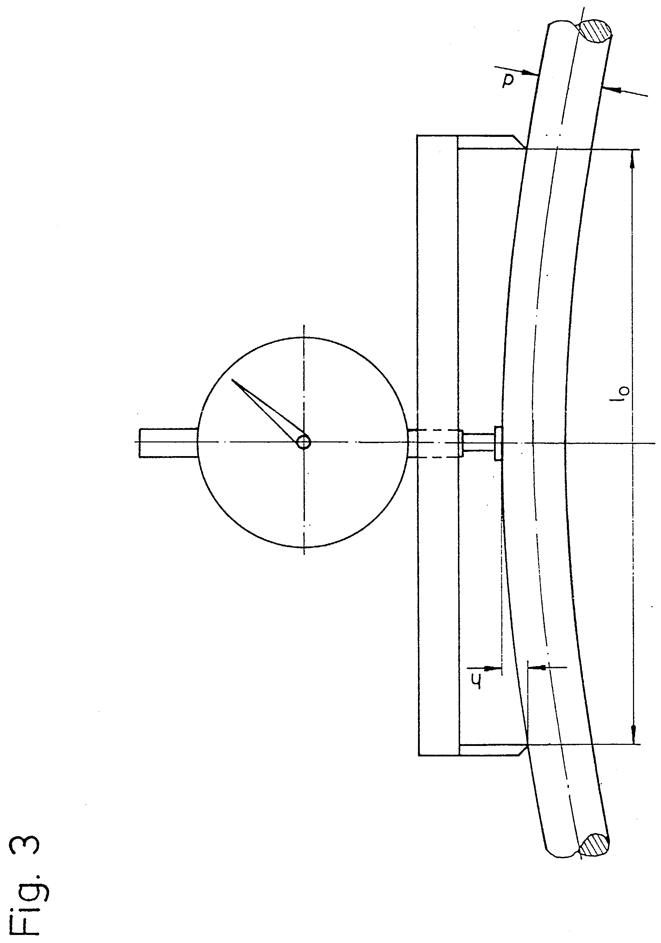

Bei der Einstellung der Dehnung kann man von der Tatsache Gebrauch machen, daß bei symmetrischer Krafteinleitung ($L_1$=$L_2$) das Biegemoment zwischen den beiden mittleren Krafteinleitungspunkten konstant und somit die Biegelinie ein Kreisbogen ist. Mit Hilfe einer Dreipunktmessung gemäß der in Figur 3 dargestellten Meßvorrichtung kann deshalb die Dehnung $\varepsilon$ über folgende Gleichung unmittelbar rechnerisch ermittelt und somit eingestellt werden:

$$\varepsilon = \frac{8 \cdot d \cdot h}{2 \cdot l_0{}^2 + 8h^2 - 8 \cdot d \cdot h}$$

Die Biegespannung $\sigma_b$ folgt daraus durch Multiplikation mit dem E-Modul, der bei Federstählen bei ca. E = 2,0 $10^5$ N/mm² liegt.

Um die Spannung unmittelbar meßtechnisch ermitteln zu können, kann man auch an einem der vier Meßunkte die Kraft F über eine Kraftmeßdose 11 ermitteln. Wegen der symmetrischen Anordnung der vier Krafteinleitungspunkte sind sämtliche vier Kräfte gleich groß und die Biegespannung $\sigma_b$ läßt sich rechnerisch ermitteln aus:

$$\sigma_b = \frac{F \cdot l}{d^3 \cdot \pi/32}$$

Der Antriebsmotor 7 ist schwenkbar angeordnet, um eine tagentiale Anpassung der Motorachse an die Enden des gebogenen Rundstabes 6 zu erreichen. Die verbleibenden Fluchtungsfehler zwischen der Achse des Antriebsmotors 7 und den Enden des Rundstabes 6 werden durch eine biegsame, jedoch torsionssteife Welle 13 aufgenommen.

**Patentansprüche**

1. Prüfmaschine zum dynamischen Prüfen langer Rundstäbe auf ihre Umlaufbiegefestigkeit, umfassend

   - Antriebsmittel (7) zur Erzeugung der Drehbewegung;
   - vier ortsfest positionierbare Lager (1 - 4), die in Richtung der Achse der Antriebswelle der Prüfmaschine fluchtend angeordnet sind, wobei
   - die zwischen den beiden äußeren Lagern (1, 4) liegenden Lager (2, 3) je eine einstellbare, senkrecht zur Richtung der Antriebswelle wirkende Hubvorrichtung (9) zur Erzeugung definierter Biegeverformungen bzw. Biegemomente im Rundstab (6) besitzen;

   **dadurch gekennzeichnet**, daß

- in jedem Lager (1 - 4) ein Kunststoffring (8), dessen Innendurchmesser größer ist als der Durchmesser des Rundstabes (6), zu dessen Führung koaxial in den Innenring des Wälzlagers (5) eingesetzt ist.

2. Prüfmaschine nach Anspruch 1,
**dadurch gekennzeichnet**, daß
alle Lager (2 - 4) bis auf das ortsfeste Lager (1) in Richtung der Antriebswelle der Prüfmaschine einstellbar ausgeführt sind.

3. Prüfmaschine nach Anspruch 1,
**dadurch gekennzeichnet**, daß
alle Lager (1 - 4) um eine Achse (10), senkrecht zur Richtung der Antriebswelle sowie senkrecht zur Wirkungsrichtung der Hubvorrichtung schwenkbar ausgeführt sind.

4. Prüfmaschine nach Anspruch 1,
**dadurch gekennzeichnet**, daß
an mindestens einen der Lager (1 - 4) eine Kraftmeßdose (11) vorhanden ist.

5. Verfahren zum dynamischen Prüfen langer Rundstäbe auf ihre Umlaufbiegefestigkeit, wobei

- der Rundstab in mindestens vier miteinander fluchtenden Lagern gelagert wird;
- die zwischen den äußeren Lagern liegenden Lager zur zur Erzeugung einer Biegeverformung senkrecht zur Fluchtrichtung verschoben werden,

**dadurch gekennzeichnet**, daß

- die Lager den Rundstab mit Spiel lagern;
- der Rundstab gedreht wird und die Kräfte im wesentlichen senkrecht zur Biegelinie bzw. zur Fluchtrichtung gemessen werden.

## Revendications

1. Machine d'essai pour essai dynamique de longues barres rondes quant à leur résistance à la flexion en rotation, comprenant

- des moyens d'entraînement (7) pour produire un mouvement de rotation ;
- quatre paliers fixes réglables (14) en position qui sont alignés dans la direction de l'axe de l'arbre d'entraînement de la machine d'essai ;
- parmi lesquels les paliers (2,3) situés entre les deux paliers externes (1,4) comprennent chacun un dispositif de levage (9) réglable agissant perpendiculairement par rapport à la direction de l'arbre d'entraînement pour générer des déformations de flexion, respectivement des moments de flexion, prédéterminés dans la barre ronde (6) ;

caractérisée en ce que

- un anneau de plastique (8), dont le diamètre interne est plus grand que le diamètre de la barre ronde (6) qu'il guide, est installé coaxialement dans l'anneau interne du roulement (5) de chacun des paliers (1-4).

2. Machine d'essai selon la revendication 1, caractérisée en ce que tous les paliers (2-4) à l'exception du palier fixe (1) sont agencés de telle sorte que leurs positions soient réglables dans la direction de l'arbre d'entraînement de la machine d'essai.

3. Machine d'essai selon la revendication 1, caractérisée en ce que tous les paliers (1-4) sont agencés mobiles en rotation autour d'un axe (10) perpendiculaire à la direction de l'arbre d'entraînement ainsi que perpendiculaire à la direction d'action des dispositifs de levage.

4. Machine d'essai selon la revendication 1, caractérisée en ce qu'au moins l'un des paliers (1-4) est muni d'un dynamomètre (11).

5. Procédé d'essai dynamique de longues barres rondes quant à leur résistance à la flexion en rotation caractérisé en ce que

- la barre ronde est installée dans au moins quatre paliers alignés les uns par rapport aux autres ;
- les paliers situés entre les paliers externes peuvent être déplacés perpendiculairement à la direction d'alignement pour générer une déformation en flexion,

caractérisé en ce que

- les paliers supportent la barre ronde avec un jeu ;
- la barre ronde est entraînée en rotation et les forces sensiblement perpendiculaires à la ligne de flexion et à la direction d'alignement sont mesurées.

## Claims

1. Testing machine for dynamically testing long round rods as to their rotating bending strength, comprising

- drive means (7) for producing the rotating movement;

- four bearings (1 - 4) which can be positioned so as to be stationary and are disposed in alignment in the direction of the axis of the drive shaft of the testing machine, wherein
- the bearings (2, 3) lying between the two outer bearings (1, 4) each comprise an adjustable lifting device (9), which acts perpendicularly to the direction of the drive shaft, for producing defined bending deformations or bending moments in the round rod (6) ;

characterised in that

- in each bearing (1 - 4) a plastics ring (8), the inside diameter of which is greater than the diameter of the round rod (6), is inserted coaxially in the inner race of the rolling bearing (5) to guide the rod.

2. Testing machine according to claim 1, characterised in that all the bearings (2 - 4), except the stationary bearing (1), are constructed so as to be adjustable in the direction of the drive shaft of the testing machine.

3. Testing machine according to claim 1, characterised in that all the bearings (1 - 4) are constructed such that they can pivot about an axis (10), perpendicularly to the direction of the drive shaft and perpendicularly to the direction of action of the lifting device.

4. Testing machine according to claim 1, characterised in that a load cell (11) is provided on at least one of the bearings (1 - 4).

5. Method for dynamically testing long round rods as to their rotating bending strength, wherein

- the round rod is supported in at least four aligned bearings;
- the bearings lying between the outer bearings are displaced perpendicularly to the direction of alignment to produce a bending deformation,

characterised in that

- the bearings support the round rod with play;
- the round rod is rotated and the forces are measured substantially perpendicularly to the bending line or direction of alignment.

Fig. 1

# Fig. 2

6   8   5

ballig

EP 0 708 916 B1

6

# Fig. 3

EP 0 708 916 B1